# EUROPÄISCHE PATENTANMELDUNG

(11) **EP 4 786 970 A1**
(43) Veröffentlichungstag der Anmeldung: **05.08.2026**
(21) Anmeldenummer: 26153734.4
(22) Anmeldetag: 23.01.2026
(51) Int. Cl.: G01N 29/036, G01N 29/22, G01N 29/24, G01N 29/32

(54) **VERFAHREN UND ANORDNUNG ZUR ÜBERWACHUNG EINES VON EINEM FLUID DURCHSTRÖMTEN ROHR- ODER BEHÄLTERABSCHNITTES**

(30) Priorität: 31.01.2025 DE 102025103627
(71) Anmelder: Fraunhofer-Gesellschaft zur Förderung der angewandten Forschung e.V., 80686 München (DE)
(72) Erfinder: Hesse, Max, 01189 Dresden (DE); Boye, André, 01189 Dresden (DE); Henze, Chris, 01189 Dresden (DE); Gottschall, Sebastian, 01189 Dresden (DE); Murcek, Roman, 01189 Dresden (DE)
(74) Vertreter: Gagel, Roland

(57) **Zusammenfassung**

Bei einem Verfahren und einer Anordnung zur Überwachung eines von einem Fluid durchströmten Rohr- oder Behälterabschnittes auf Materialablagerungen und/oder Eigenschaftsänderungen des Fluids hin wird ein Sensor (1) mit einem Schwingkristall (4) in dem Rohr- oder Behälterabschnitt angeordnet und die Resonanzfrequenz und/oder Schwingungsamplitude des Schwingkristalls (4) mit einem Netzwerkanalysator gemessen. Der Schwingkristall (4) liegt dabei mit einer Vorderseite am Sensor (1) frei, so dass er mit dem im Rohr- oder Behälterabschnitt strömenden Fluid direkt in Kontakt ist. Der Sensor (1) verfügt auch über ein Druckausgleichssystem (5, 7, 9) zum Ausgleich eines auf die Vorderseite des Schwingkristalls (4) ausgeübten Druckes des Fluids. Aus der gemessenen Resonanzfrequenz und/oder Schwingungsamplitude werden anhand einer durch Kalibrierung erhaltenen Vergleichsinformation der Grad an Materialablagerungen und/oder eine Eigenschafts-änderung des Fluids bestimmt. Das Verfahren und die Anordnung ermöglichen eine automatische Überwachung von Produktions- oder Reinigungsprozessen in geschlossenen Systemen.

## Beschreibung

### Technisches Anwendungsgebiet

Die vorliegende Erfindung betrifft ein Verfahren und eine Anordnung zur Überwachung eines von einem Fluid durchströmten Rohr- oder Behälterabschnittes auf Materialablagerungen und/oder Eigenschaftsänderungen des Fluids hin, insbesondere während eines Produktions- oder Reinigungsprozesses.

Bei Produktionsprozessen in der Lebensmittel-, der Pharma-, der Kosmetik- oder der Chemieindustrie werden häufig fluide Medien durch Rohrleitungen gefördert, die im Laufe der Zeit durch Materialablagerungen aus den geförderten Fluiden verschmutzt werden können. Eine regelmäßige Kontrolle auf Materialablagerungen ist daher für viele Anwendungen erforderlich, vor allem im Bereich der Lebensmittelindustrie bei der Produktion von Lebensmitteln. Die Möglichkeit einer automatisierten Überwachung der Rohrleitungen bzw. von entsprechenden Abschnitten der Rohrleitungen wäre daher wünschenswert. Das Gleiche gilt für eine Überwachung der Eigenschaften des geförderten Fluids, um beispielsweise einen Medienwechsel oder eine signifikante Änderung von Eigenschaften des Fluids, beispielsweise aufgrund geänderter Zusammensetzung, detektieren zu können.

Aus der AT 006 059 U1 ist eine Messzelle zur Durchführung von Messungen an flüssigen oder gasförmigen Proben bekannt. Die Messzelle weist ein piezoelektrisches Resonatorelement auf, welches einen Messraum für die zu messende Probe begrenzt, und lässt sich beispielsweise für die Messung der Viskosität eines Fluids oder der Konzentration bestimmter Komponenten in einem Fluid über Anlagerung dieser Komponenten nutzen.

Die Aufgabe der vorliegenden Erfindung besteht daher darin, ein Verfahren und eine Anordnung zur Überwachung eines von einem Fluid durchströmten Rohr- oder Behälterabschnittes auf Materialablagerungen an der Innenwanderung des Rohr- oder Behälterabschnittes und/oder auf eine Eigenschaftsänderung des Fluids hin anzugeben, die eine automatisierte Überwachung während eines Produktions- oder Reinigungsprozesses ermöglichen.

### Darstellung der Erfindung

Die Aufgabe wird mit dem Verfahren und der Anordnung gemäß den Patentansprüchen 1 und 10 gelöst. Vorteilhafte Ausgestaltungen des Verfahrens und der Anordnung sind Gegenstand der abhängigen Patentansprüche oder lassen sich der nachfolgenden Beschreibung sowie dem Ausführungsbeispiel entnehmen.

Bei dem vorgeschlagenen Verfahren wird ein Sensor mit einem piezoelektrischen Schwingkristall, insbesondere einem Schwingquarz, in dem Rohr- oder Behälterabschnitt angeordnet und die Resonanzfrequenz und/oder eine Schwingungsamplitude des Schwingkristalls vorzugsweise mit einem Netzwerkanalysator, insbesondere einem vektoriellen Netzwerkanalysator (VNA), gemessen. Der Sensor ist bei diesem Verfahren so ausgestaltet, dass der Schwingkristall mit einer Vorderseite am Sensor freiliegt, so dass er mit dem im Rohr- oder Behälterabschnitt strömenden Fluid direkt in Kontakt ist, also keine zusätzlichen Zuleitungen oder Kanäle für das Fluid am Sensor erforderlich sind. Unter der Vorderseite des platten- oder scheibenförmigen Schwingkristalls wird hierbei die mit dem Fluid in Kontakt kommende Seite bezeichnet. Der Sensor verfügt außerdem über ein Druckausgleichsystem, über das ein auf die Vorderseite des Schwingkristalls ausgeübter Druck des Fluids auch bei schnellen Druckveränderungen oder Druckstößen, wie sie in einem strömenden Fluid vorkommen können, durch einen Gegendruck auf die Rückseite des Schwingkristalls ausgeglichen wird. Die gemessene Resonanzfrequenz und/oder Schwingungsamplitude (bei der Resonanzfrequenz) wird in einer Auswerteeinrichtung ausgewertet. Hierbei wird aus der gemessenen Resonanzfrequenz und/oder Schwingungsamplitude anhand einer durch vorherige Kalibrierung des Sensors erhaltenen Vergleichsinformation ein Grad der Materialablagerungen und/oder eine Eigenschaftsänderung des Fluids bestimmt. Bei dem Grad der Materialablagerungen kann es sich im einfachsten Fall darum handeln, ob die Materialablagerungen eine bestimmte (vorgebbare) Schwelle überschreiten oder nicht. Vorzugsweise werden jedoch mehr als zwei Stufen bzw. Grade bestimmt, die jeweils mit der Menge an Materialablagerungen korrelieren. Das Ergebnis der Auswertung kann dann, gegebenenfalls auch nur unter bestimmten Bedingungen wie beispielsweise bei Überschreitung eines Schwellwerts, ausgegeben und/oder einer Prozesssteuerung eines Produktions- oder Reinigungsprozesses zugeführt werden, falls das strömende Fluid Teil eines Produktions- oder Reinigungsprozesses ist.

Besonders vorteilhaft wird das Verfahren in industriellen Produktionslinien eingesetzt, in denen der Rohr- oder Behälterabschnitt Bestandteil eines geschlossenen Systems der Produktionslinie ist. Die Überwachung erfolgt dann während eines Produktions- oder Reinigungsprozesses in dem geschlossenen System. Durch diese Inline-Messungen lassen sich automatisiert während eines Produktions- oder Reinigungsprozesses Materialablagerungen bzw. Rückstände an der Rohr- oder Behälterinnenwandung detektieren, da sich diese auch auf der Vorderseite des Schwingkristalls ablagern und dadurch die Schwingungseigenschaften des Kristalls ändern. Dabei können, je nach Art der Kalibrierung des Sensors und Eigenschaften des Prozesses, Verschmutzungszustand oder Verschmutzungsmenge, aber auch Verschmutzungsart erfasst werden. Da auch die Viskositätseigenschaften des Fluids Einfluss auf die Schwingungen des Schwingkristalls haben, können mit dem Verfahren auch Medienwechsel (zum Beispiel vom Produkt zum Reinigungsmittel) oder auch eine die Viskosität beeinflussende Änderung der Zusammensetzung des Fluids erfasst werden.

Der Sensor selbst stellt einen Schwingkristall-basierten Inline-Sensor dar, der bei Änderung der Eigenfrequenz oder Schwingungsamplitude, beispielsweise verursacht durch Materialablagerungen oder Viskositätsänderung darüber liegender Medien, eine Signaländerung erzeugt, welche dann über einen Netzwerkanalysator erfasst werden kann. Das Messprinzip entspricht dem einer sogenannten Quarzkristall-Mikrowaage (QCM), wie sie beispielsweise auch in der EP 1 811 292 A1 zum Nachweis eines Stoffes in einer Probenflüssigkeit eingesetzt wird.

Da in strömenden Medien auch schnelle Druckunterschiede und Druckstöße auftreten können und der Schwingkristall aufgrund seiner geringen Dicke relativ stoßempfindlich ist, muss bei dem vorgeschlagenen Verfahren und der vorgeschlagenen Anordnung der Sensor das angegebene Druckausgleichssystem aufweisen. Dieses System kann in unterschiedlicher Weise ausgestaltet werden. So kann in einer Ausgestaltung der Schwingkristall elastisch gelagert werden, so dass er sich als Ganzes bei entsprechenden Druckänderungen in einer Richtung senkrecht zu seiner Vorder- bzw. Rückseite hin und her bewegen kann. Der Sensor weist hierbei ein mit einer Flüssigkeit oder einem Gas gefülltes, geschlossenes Innenvolumen auf, das an die Rückseite des Schwingkristalls angrenzt. Die elastische Lagerung kann beispielsweise mittels eines Elastomers erfolgen und bewirkt eine Dämpfung eventueller Druckstöße. In einer anderen Ausgestaltung bildet die Rückseite des Schwingkristalls ebenfalls Teil eines Innenvolumens bzw. einer inneren Kammer des Sensors, das wiederum mit einer Flüssigkeit oder einem Gas gefüllt ist, dessen Druck aktiv geregelt wird. Durch einen in dem strömenden Fluid vorgelagerten Drucksensor, wird ein eventuell auftretender Druckstoß erfasst, der demnächst den Sensor erreicht, und dann das Ausgleichssystem zu passender Zeit (in Kombination mit anderen Messwerten wie Strömungsgeschwindigkeit) zur Einstellung eines passenden Innendrucks im Innenvolumen bzw. der inneren Kammer angesteuert.

Besonders vorteilhaft weist der Sensor ein mit einer Flüssigkeit oder einem Gas gefülltes, geschlossenes Innenvolumen auf, das an die Rückseite des Schwingkristalls angrenzt. Dieses Innenvolumen ist über wenigstens einen Kanal mit dem Rohr- oder Behälterinneren verbunden und durch eine Membran in diesem Kanal von dem strömenden Fluid getrennt. Das strömende Fluid drückt dann gleichzeitig auf die Membran und die Vorderseite des Schwingkristalls und überträgt den Druck oder einen eventuellen Druckstoß über die Membran auf die Flüssigkeit oder das Gas des Innenvolumens, das dann einen entsprechenden Gegendruck auf die Rückseite des Schwingkristalls ausübt. Dieses System kommt ohne aktive Komponenten aus und erzeugt zuverlässig einen geeigneten Gegendruck zum Schutz des Schwingkristalls.

Der Sensor bzw. Schwingkristall wird beim vorgeschlagenen Verfahren vorzugsweise in einem Messbereich betrieben der innerhalb des Bereiches zwischen 100 Hz und 100 MHz liegt. Der jeweils genutzte Messbereich hängt unter anderem von der Art des zu bestimmenden Mediums und der Größe des Schwingkristalls ab.

Mit dem vorgeschlagenen Verfahren und den Möglichkeiten der Anpassung des Messbereiches an die jeweilige Anwendung lässt sich ein genügend großer Abstand zu den im Prozess auftretenden natürlichen Schwingungen, beispielsweise verursacht von Pumpen, einhalten. Das Verfahren ermöglicht eine flexible Anpassbarkeit an die spezifische Anwendung, also an unterschiedliche Substanzen, und die Erfassung unterschiedlicher Zustände. Der Sensor lässt sich mit kompaktem Aufbau und mittels marktverfügbarer Bauteile realisieren. Er ermöglicht eine hohe Signal- bzw. Messrate und Auswertegeschwindigkeit. Er weist ein breites Ansprechverhalten von Substanzen auf, von Wasser bis zu eingetrockneten Salzen.

Vorzugsweise wird beim vorgeschlagenen Verfahren auch die Temperatur des im Rohr oder Behälter strömenden Fluids, vorzugsweise nahe am Sensor, oder die Temperatur am Schwingkristall erfasst. Dies ist besonders bei Temperaturschwankungen des Fluids erforderlich. Die Temperatur kann dabei durch einen Temperatursensor im Sensor selbst, oder auch durch einen dem Sensor vorgelagerten Temperatursensor erfasst werden. Die jeweils gemessene Temperatur wird bei der Auswertung berücksichtigt. Hierzu sollte die Kalibrierung des Sensors auch bereits bei unterschiedlichen Temperaturen erfolgt sein.

Für einen Einsatz des Sensors in Lebensmittelanwendungen lässt sich dieser unter Berücksichtigung von Hygienedesignrichtlinien ausgestalten. Dabei werden zur Vermeidung von Spalten am Sensor Übergänge zwischen Bauteilen des Sensors mit Elastomeren verfüllt oder die Bauteile sind mit Lebensmittelprozess-tauglichen Adhäsions- oder Bindemitteln aneinandergefügt. Auch scharfe Kanten oder mindestens annähernd rechtwinklige Übergänge werden bei der Gestaltung des Sensors für diese Anwendung vermieden.

Die Auswertung erfolgt beim vorgeschlagenen Verfahren vorzugsweise mit einem Mikroprozessor, der mit einer geeigneten Auswertesoftware arbeitet. Die hierbei eingesetzten Algorithmen zeichnen sich dadurch aus, dass sie aus den Sensorsignalen im Wesentlichen zwei Arten von Substanzen herauslesen bzw. unterscheiden können. Für die Analyse von viskosen Substanzen (zum Beispiel fluide Produkte, Verschmutzungen oder Reinigungsmittel) erfolgt die Auswertung der Amplitude der Resonanzschwingung des Schwingkristalls (Peakhöhe). Dies ist möglich, da diese viskosen Medien in der Regel unterschiedliche E-Module aufweisen. Zur Analyse von festen Anhaftungen (zum Beispiel kristallines Fouling) auf der Oberfläche der Vorderseite des Schwingkristalls erfolgt eine Auswertung der Frequenzverschiebung der Resonanzfrequenz des Schwingkristalls.

Die vorgeschlagene Anordnung umfasst entsprechend einen Sensor mit einem Schwingkristall, der mit einem Netzwerkanalysator verbunden ist, mit dem eine Resonanzfrequenz und/oder eine Schwingungsamplitude des Schwingkristalls gemessen werden kann. Der Sensor ist so ausgestaltet, dass der Schwingquarz mit einer Vorderseite am Sensor freilegt, so dass er bei Anordnung des Sensors in einem Rohr- oder Behälterabschnitt mit einem darin strömenden Fluid direkt in Kontakt ist. Der Sensor verfügt weiterhin über ein Druckausgleichsystem, über das ein auf die Vorderseite des Schwingquarzes ausgeübter Druck des Fluids auch bei Druckschwankungen im strömenden Fluid immer durch einen Gegendruck auf die Rückseite des Schwingkristalls ausgeglichen wird. Der Netzwerkanalysator ist mit einer Auswerteeinrichtung verbunden, die so ausgebildet ist, dass sie aus einer mit dem Netzwerkanalysator gemessenen Resonanzfrequenz und/oder Schwingungsamplitude anhand einer durch Kalibration des Sensors erhaltenen Vergleichsinformation einen Grad an Materialablagerungen auf dem Schwingkristall und/oder Eigenschaftsänderungen eines Fluids bestimmen kann, das mit einer Vorderseite des Schwingkristalls in Kontakt ist. Besondere Ausgestaltungen des Sensors in der vorgeschlagenen Anordnung entsprechen denen, die bereits in Verbindung mit dem Verfahren erläutert wurden.

Das vorgeschlagene Verfahren und die zugehörige Anordnung lassen sich beispielsweise in Produktionslinien der Lebensmittel-, Pharma-, Kosmetik- oder Chemieindustrie einsetzen. Besonders bevorzugt kommen das Verfahren und die Anordnung bei Reinigungs- und/oder Produktionsprozessen in diesen Industrien zum Einsatz. Das Verfahren und die Anordnung lassen sich jedoch selbstverständlich auch in anderen Bereichen für Anwendungen einsetzen, in denen entsprechende Materialablagerungen oder Medienwechsel in Rohr- oder Behälterabschnitten erfasst werden sollen.

### Kurze Beschreibung der Zeichnungen

Das vorgeschlagene Verfahren und die zugehörige Anordnung werden nachfolgend anhand eines Ausführungsbeispiels in Verbindung mit den Zeichnungen nochmals kurz erläutert. Hierbei zeigen:
- Fig. 1: eine stark schematisierte Darstellung eines bei dem Verfahren eingesetzten Sensors;
- Fig. 2: eine schematische Schnittdarstellung des Sensors der Figur 1; und
- Fig. 3: ein Übersichtsbild über die Durchführung des vorgeschlagenen Verfahrens in einem Produktionsprozess.

### Wege zur Ausführung der Erfindung

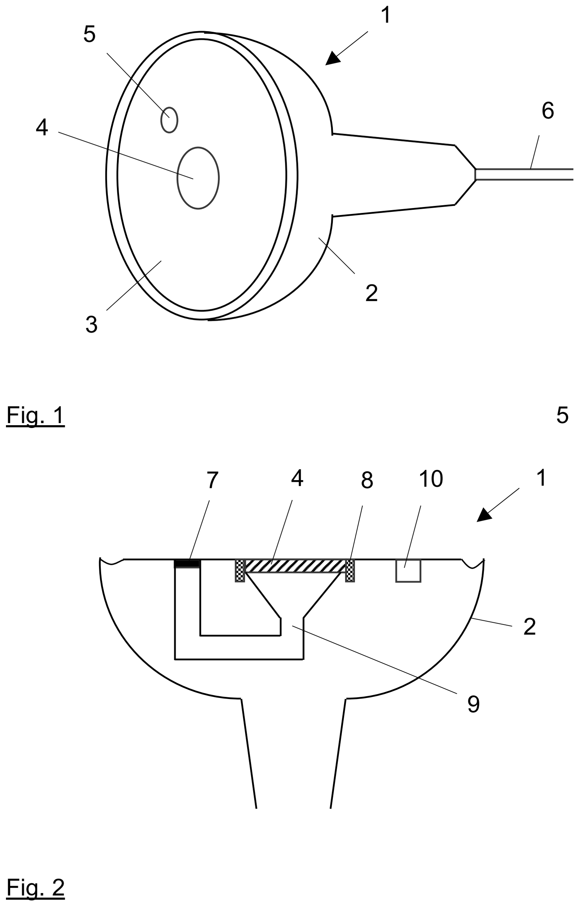

Bei dem vorgeschlagenen Verfahren erfolgt die Überwachung eines fluiddurchströmten Rohr- oder Behälterabschnittes auf Materialablagerungen und/oder Eigenschaftsänderungen des Fluids hin mit einem besonders ausgestalteten Sensor wie er beispielhaft in den Figuren 1 und 2 dargestellt ist. Dieser Sensor wird direkt in dem Rohr- oder Behälterabschnitt platziert, in der Regel im Bereich der Innenwandung des Rohr- oder Behälterabschnittes. Hierzu kann beispielsweise auch eine geeignet große Öffnung in der Rohr- oder Behälterwandung vorgesehen werden, in die der Sensor eingesetzt wird. Die Übergangsbereiche müssen dann entsprechend abgedichtet werden.

Figur 1 zeigt eine schematische Darstellung einer beispielhaften Ausgestaltung des Sensors 1, der ein entsprechendes Gehäuse 2 aufweist, in das an der offenen Vorderseite eine kreisförmige Halterung 3 für den Schwingkristall 4 eingesetzt ist. Die Vorderseite des Schwingkristalls 4 ist damit am Sensor frei zugänglich und kann beispielsweise von dem im Rohr oder Behälter strömenden Fluid direkt überströmt werden. In der Figur 1 ist auch eine entsprechende Druckausgleichsöffnung 5 für das Druckausgleichssystem des Sensors zu erkennen, in die eine in dieser Figur nicht erkennbare Membran eingesetzt ist. Der Sensor 1, vorzugsweise in Form einer Quarzkristall-Mikrowaage (QCM), wird über ein Kabel 6 mit einem Netzwerkanalysator, insbesondere einem VNA, verbunden.

Figur 2 zeigt eine Schnittdarstellung des vorderen Teils des Sensors 1 in schematische Darstellung. In dieser Schnittdarstellung sind der Schwingkristall 4 in der Halterung 3 sowie die Druckausgleichsöffnung 5 mit der darin angeordneten Druckausgleichsmembran 7 zu erkennen. Der Schwingkristall 4 wird in diesem Beispiel über eine Einspannung 8 fixiert, die gleichzeitig der Abdichtung eines inneren Fluidvolumens 9 für den Druckausgleich dient. Das innere Fluidvolumen 9 ist mit einem Fluid wie beispielsweise Wasser gefüllt und grenzt im Bereich des Schwingkristalls 4 vollflächig an die Rückseite dieses Kristalls an. Bei Erhöhung des Druckes des Fluids im Rohr oder Behälter wird über die Druckausgleichsmembran dieser Druck auch auf das Fluid im inneren Fluidvolumen übertragen, so dass auch der Druck an der Rückseite des Schwingkristalls 4 entsprechend ansteigt und ein Brechen des Schwingkristalls 4 verhindert. In der Figur ist auch ein Temperatursensor 10 zu erkennen, . der im Sensor 1 im Bereich der Vorderseite neben dem Schwingkristall 4 angeordnet ist.

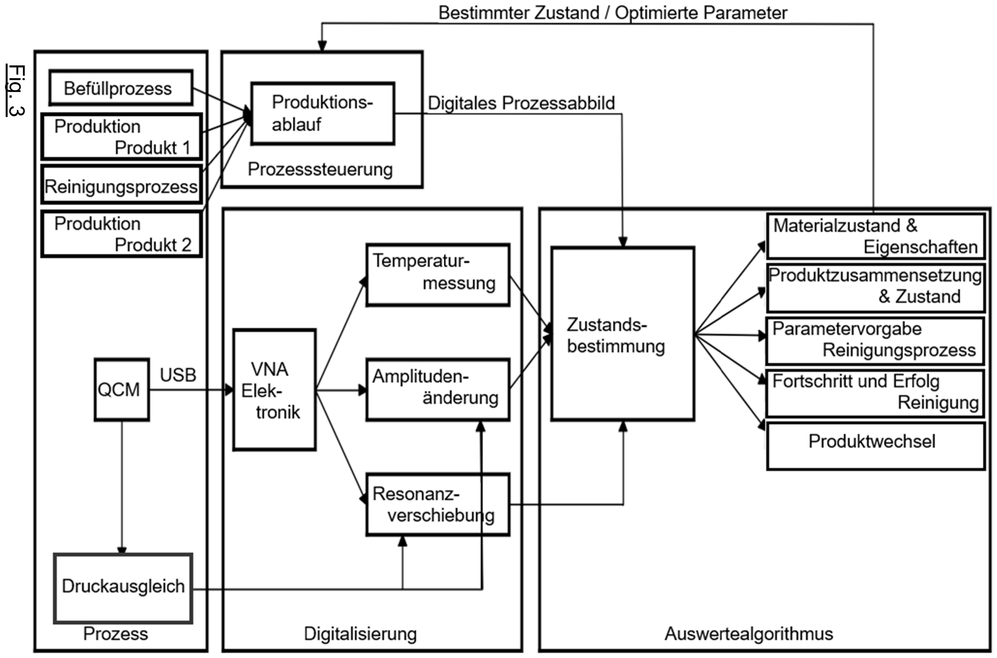

Figur 3 zeigt ein Übersichtsbild, in dem die Nutzung des vorgeschlagenen Verfahrens in einer Produktlinie bei der Herstellung eines Produkts beispielhaft dargestellt ist. Der mit dem Verfahren vermessene Rohr- oder Behälterabschnitt befindet sich dabei in einem geschlossenen System, das bei der Produktion mit dem jeweiligen Produkt befüllt und vor einem Produktwechsel oder bei zu starker detektierter Verschmutzung einem Reinigungsprozess unterzogen wird. Die Befüllung und Reinigung erfolgen über die Prozesssteuerung. Durch den Sensor des vorgeschlagenen Verfahrens, im vorliegenden Beispiel eine QCM, die über ein Druckausgleichssystem verfügt und innerhalb des Prozesses, also im zu überwachenden Rohr- oder Behälterabschnitt angeordnet ist, werden dann entsprechende Zustände mittels des eingesetzten Netzwerkanalysators (VNA) erfasst. Im vorliegenden Beispiel werden Resonanzverschiebungen, Amplitudenänderungen und die jeweilige Temperatur erfasst und in der Auswerteeinrichtung mit einem Auswertealgorithmus ausgewertet. Dabei erfolgt eine Zustandsbestimmung die unterschiedliche Ziele haben kann. So können ein Produktwechsel, der Fortschritt und Erfolg einer Reinigung, Änderungen einer Produktzusammensetzung, die sich auf die Viskosität auswirken, und ein entsprechender Produktzustand sowie ein Materialzustand und Materialeigenschaften erfasst werden. Aufgrund der Bestimmung des Grades der Materialablagerungen kann direkt eine Parametervorgabe für den Reinigungsprozess erfolgen, beispielsweise ein Weiterzuführen der Reinigungsprozess oder eine Erhöhung der Konzentration des Reinigungsmittels. Über ein digitales Prozessabbild erkennt der Auswertealgorithmus die jeweilige Phase im Produktionsablauf. Die bei der Auswertung bestimmten Zustände bzw. daraus abgeleitete optimierte Parameter können dann der Prozesssteuerung zugeführt werden, die auf Basis dieser Daten den Produktionsablauf steuern kann.

Besondere Vorteile bietet das Verfahren bei der Durchführung einer CIP-Reinigung (CIP: Cleaning in Place). Es kann zur Überwachung / Qualitätssicherung der vollständigen Reinigung, aber genauso für eine bedarfsgerechte Steuerung und Regelung der CIP-Prozesse eingesetzt werden. So kann die Reinigung nicht nur bedarfsgerecht gestartet, sondern auch beendet werden. Der Sensor sollte dabei entweder an der am schwierigsten zu reinigenden Stelle im Rohr oder Behälter positioniert werden, oder an einer Stelle, an der aufgrund der Materialablagerungen am Sensor auf die Situation an der am schwierigsten zu reinigenden Stelle geschlossen werden bzw. diese nachgebildet werden kann.

Insgesamt lassen sich mit den Informationen des Sensors weitere Rückschlüsse ziehen und die CIP-Prozesse beispielsweise adaptiv in folgender Weise gestalten:
∘ Sobald sich das Sensorsignal für eine festgelegte Zeit insgesamt nicht mehr ändert, kann der Vorspülprozess des CIP beendet werden.
∘ Ein beim CIP-Prozess häufig eingesetzter Laugeschritt zur vornehmlichen Entfernung organischer Verschmutzungen kann beendet werden, wenn sich die Amplitude nicht mehr ändert bzw. der Ausgangszustand erreicht wurde.
∘ Im sich häufig anschließenden Säureschritt des CIP-Prozesses zur vornehmlichen Entfernung von kristallinem Fouling wird die Frequenzverschiebung gegenüber dem kalibrierten Zustand betrachtet, um die Notwendigkeit der Reinigung aber auch das Ende und den richtigen Zeitpunkt für ein abschließendes "Klarspülen" zu bestimmen.

### Bezugszeichenliste

- 1: Sensor
- 2: Gehäuse
- 3: Halterung
- 4: Schwingkristall
- 5: Druckausgleichsöffnung
- 6: Verbindungskabel
- 7: Druckausgleichsmembran
- 8: Einspannung
- 9: inneres Fluidvolumen
- 10: Temperatursensor

## Patentansprüche

1. Verfahren zur Überwachung eines von einem Fluid durchströmten Rohr- oder Behälterabschnittes auf Materialablagerungen und/oder Eigenschaftsänderungen des Fluids hin, insbesondere während eines Produktions- oder Reinigungsprozesses, bei dem
- ein Sensor (1) mit einem piezoelektrischen Schwingkristall (4) in dem Rohr- oder Behälterabschnitt angeordnet und eine Resonanzfrequenz und/oder eine Schwingungsamplitude des Schwingkristalls (4) gemessen wird, wobei der Schwingkristall (4) so im Sensor (1) gelagert ist, dass er mit einer Vorderseite am Sensor (1) freiliegt, so dass er mit dem im Rohr- oder Behälterabschnitt strömenden Fluid direkt in Kontakt ist,
- der Sensor (1) über ein Druckausgleichssystem (5, 7, 9) verfügt, über das ein auf die Vorderseite des Schwingkristalls (4) ausgeübter Druck des Fluids auch bei Druckschwankungen im strömenden Fluid durch einen Gegendruck auf die Rückseite des Schwingkristalls (4) ausgeglichen wird, und
- in einer Auswerteeinrichtung aus der gemessenen Resonanzfrequenz und/oder Schwingungsamplitude anhand einer durch Kalibration des Sensors (1) erhaltenen Vergleichsinformation ein Grad der Materialablagerungen und/oder Eigenschaftsänderungen des Fluids bestimmt wird oder werden.

2. Verfahren nach Anspruch 1,
**dadurch gekennzeichnet,**
**dass** der Rohr- oder Behälterabschnitt Bestandteil eines geschlossenen Systems einer Produktionslinie ist und die Überwachung während eines Produktions- oder Reinigungsprozesses in dem geschlossenen System erfolgt.

3. Verfahren nach Anspruch 1 oder 2,
**dadurch gekennzeichnet,**
**dass** der Grad der Materialablagerungen und/oder Eigenschaftsänderungen des Fluids mehrmals in zeitlichen Abständen durch entsprechende Messungen bestimmt wird oder werden.

4. Verfahren nach einem der Ansprüche 1 bis 3,
**dadurch gekennzeichnet,**
**dass** bei Durchführung eines Reinigungsprozesses in dem Rohr- oder Behälterabschnitt Parameter des Reinigungsprozesses, insbesondere eine Dauer des Reinigungsprozesses und/oder eine Zusammensetzung, insbesondere Konzentration, eines beim Reinigungsprozess eingesetzten Reinigungsmittels, über den jeweils bestimmten Grad der Materialablagerungen gesteuert wird.

5. Verfahren nach einem der Ansprüche 1 bis 4,
**dadurch gekennzeichnet,**
**dass** bei Überschreitung eines vorgebbaren Grades der Materialablagerungen ein Signal oder eine Meldung abgegeben wird.

6. Verfahren nach einem der Ansprüche 1 bis 5,
**dadurch gekennzeichnet,**
**dass** das Druckausgleichssystem (5, 7, 9) des Sensors (1) durch ein mit einer Flüssigkeit oder einem Gas gefülltes, geschlossenes Innenvolumen (9) des Sensors (1) gebildet wird, welches an die Rückseite des Schwingkristalls (4) angrenzt und über wenigstens eine Membran (7) mit dem strömenden Fluid in Kontakt steht.

7. Verfahren nach einem der Ansprüche 1 bis 5,
**dadurch gekennzeichnet,**
**dass** das Druckausgleichssystem (5, 7, 9) des Sensors (1) wenigstens einen Drucksensor im strömenden Fluid, einen Druckregler und ein mit einer Flüssigkeit oder einem Gas gefülltes Innenvolumen (9) des Sensors (1) aufweist, welches an die Rückseite des Schwingkristalls (4) angrenzt, wobei der Druck der Flüssigkeit oder des Gases im Innenvolumen in Abhängigkeit von einem durch den Drucksensor erfassten Druck durch den Druckregler auf den gleichen Druck eingestellt wird.

8. Verfahren nach einem der Ansprüche 1 bis 5,
**dadurch gekennzeichnet,**
**dass** das Druckausgleichssystem (5, 7, 9) des Sensors (1) durch ein mit einer Flüssigkeit oder einem Gas gefülltes, geschlossenes Innenvolumen (9) des Sensors (1) gebildet wird, welches an die Rückseite des Schwingkristalls (4) angrenzt, wobei der Schwingkristall (4) elastisch gelagert ist.

9. Verfahren nach einem der Ansprüche 1 bis 8,
**dadurch gekennzeichnet,**
**dass** im strömenden Fluid oder an einer dem Schwingkristall nahen Stelle im Sensor die Temperatur gemessen und bei der Bestimmung des Grads der Materialablagerungen und/oder Eigenschaftsänderungen des Fluids berücksichtigt wird.

10. Anordnung zur Überwachung eines von einem Fluid durchströmten Rohr- oder Behälterabschnittes auf Materialablagerungen und/oder Eigenschaftsänderungen des Fluids hin, die wenigstens
- einen Sensor (1) mit einem piezoelektrischen Schwingkristall (4),
- einen mit dem Sensor (1) verbundenen Netzwerkanalysator, mit dem eine Resonanzfrequenz und/oder eine Schwingungsamplitude des Schwingkristalls (4) gemessen werden kann, und
- eine Auswerteeinrichtung aufweist, die so ausgebildet ist, dass sie aus einer mit dem Netzwerkanalysator gemessenen Resonanzfrequenz und/oder Schwingungsamplitude anhand einer durch Kalibration des Sensors (1) erhaltenen Vergleichsinformation einen Grad an Materialablagerungen auf dem Schwingkristall (4) und/oder Eigenschaftsänderungen eines Fluids bestimmen kann, das mit einer Vorderseite des Schwingkristalls (4) in Kontakt ist,
- wobei der Schwingkristall (4) so im Sensor (1) gelagert ist, dass er mit der Vorderseite am Sensor (1) freiliegt, so dass er bei Anordnung des Sensors (1) in einem Rohr- oder Behälterabschnitt mit einem darin strömenden Fluid direkt in Kontakt ist, und der Sensor (1) über ein Druckausgleichssystem (5, 7, 9) verfügt, über das ein auf die Vorderseite des Schwingkristalls (4) ausgeübter Druck des Fluids auch bei Druckschwankungen im strömenden Fluid durch einen Gegendruck auf die Rückseite des Schwingkristalls (4) ausgeglichen wird.

11. Anordnung nach Anspruch 10,
**dadurch gekennzeichnet,**
**dass** das Druckausgleichssystem (5, 7, 9) des Sensors (1) durch ein mit einer Flüssigkeit oder einem Gas gefülltes, geschlossenes Innenvolumen (9) des Sensors (1) gebildet wird, welches an die Rückseite des Schwingkristalls (4) angrenzt und über wenigstens eine Membran (7) von einem Außenvolumen getrennt ist, an das die Vorderseite des Schwingkristalls (4) angrenzt.

12. Anordnung nach Anspruch 10,
**dadurch gekennzeichnet,**
**dass** das Druckausgleichssystem (5, 7, 9) des Sensors (1) wenigstens einen Drucksensor, einen Druckregler und ein mit einer Flüssigkeit oder einem Gas gefülltes Innenvolumen (9) des Sensors (1) aufweist, welches an die Rückseite des Schwingkristalls (4) angrenzt, wobei der Drucksensor in einem Außenvolumen angeordnet ist, an das die Vorderseite des Schwingkristalls (4) angrenzt, und der Druck der Flüssigkeit oder des Gases im Innenvolumen in Abhängigkeit von einem durch den Drucksensor erfassten Druck durch den Druckregler auf den gleichen Druck eingestellt wird.

13. Anordnung nach Anspruch 10,
**dadurch gekennzeichnet,**
**dass** das Druckausgleichssystem (5, 7, 9) des Sensors (1) durch ein mit einer Flüssigkeit oder einem Gas gefülltes, geschlossenes Innenvolumen (9) des Sensors (1) gebildet wird, welches an die Rückseite des Schwingkristalls (4) angrenzt, wobei der Schwingkristall (4) elastisch gelagert ist.

14. Anordnung nach einem der Ansprüche 10 bis 13,
**dadurch gekennzeichnet,**
**dass** die Anordnung wenigstens einen Temperatursensor zur Messung der Temperatur aufweist, wobei die Auswerteeinrichtung so ausgebildet ist, dass sie die gemessene Temperatur bei der Bestimmung des Grads der Materialablagerungen und/oder Eigenschaftsänderungen des Fluids berücksichtigt.
